(19) Europäisches Patentamt
European Patent Office
Office européen des brevets

(11) **EP 3 340 430 A1**

## (12) EUROPEAN PATENT APPLICATION
published in accordance with Art. 153(4) EPC

(43) Date of publication:
**27.06.2018 Bulletin 2018/26**

(51) Int Cl.:
***H02J 50/05*** (2016.01)

(21) Application number: **16839166.2**

(22) Date of filing: **17.08.2016**

(86) International application number:
**PCT/JP2016/074042**

(87) International publication number:
**WO 2017/033819 (02.03.2017 Gazette 2017/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.08.2015 JP 2015164250**

(71) Applicant: **Dyden Corporation**
**Kurume-shi, Fukuoka 830-8511 (JP)**

(72) Inventors:
• **KODAMA Seiju**
**Kurume-shi**
**Fukuoka 830-0051 (JP)**

• **TERASAKI Koji**
**Kurume-shi**
**Fukuoka 830-0051 (JP)**
• **ODA Hidenori**
**Kurume-shi**
**Fukuoka 830-0051 (JP)**
• **KURANAGA Yuji**
**Kurume-shi**
**Fukuoka 830-0051 (JP)**

(74) Representative: **HGF Limited**
**Saviour House**
**9 St. Saviourgate**
**York YO1 8NQ (GB)**

## (54) POWER SUPPLY DEVICE

(57) Provided is a power supply device in which an additional capacitance C formed by snow accretion and a resistance component R of the snow accretion equivalently form a series circuit, as a result of which Joule loss generated by current flowing through the snow accretion resistance component R can be effectively suppressed to obtain a stable output that does not depend on the weather.

A power supply device 10 is provided with a support 30 that is secured to a supporting structure 101 of a power transmission line and supports an induction electrode 20. The support 30 is provided with: an elongated body 31 that has one end 31a secured on a side of the supporting structure 101 of the power transmission line and another end 31b disposed spaced apart from the supporting structure 101 of the power transmission line; and a snow accretion preventing section 32 that is connected to the other end 31b of the elongated body 31, supports the induction electrode 20, disposed midway in the elongated body 31, and has a gap 32a between the snow accretion preventing section 32 and the elongated body 31.

Figure 1

(a)

(b)

(c)

**Description**

TECHNICAL FIELD

The present invention relates to a power supply device that is attached to a supporting structure such as a steel tower or a concrete pole used for a power transmission line and can utilize an electrostatic induction effect generated around an overhead electric wire (high-voltage wire) to take out electric power contactlessly from the overhead electric wire.

BACKGROUND

A conventional power supply device is provided with: a capacitance that consists of an overhead power line and an electrode extending along the overhead power line in a longitudinal direction thereof with an insulator being intervened therebetween; an inductance that is connected in parallel to the capacitance; and an output section that is drawn from both ends of a parallel circuit including the capacitance and the inductance. The parallel circuit is operated as a parallel resonance circuit and power is supplied from the output section, so that it is possible to obtain a compact and simple structure and improve power supply efficiency to a load as compared with conventional power supply devices (see Patent Document 1, for example).

Another conventional power supply device is provided with: a stray capacitance between an induction electrode disposed near an overhead power line and the ground (ground capacitance of the induction electrode); a transformer that is connected in parallel to the ground capacitance of the induction electrode and steps down a primary voltage to output a secondary voltage; and an output section that is drawn from both ends on the secondary side of the transformer. A core of the transformer has a gap and a parallel circuit including the ground capacitance of the induction electrode and an excitation susceptance of the transformer is operated as a parallel resonance circuit, and load power is supplied from the output section (see Patent Document 2, for example).

Citation List

Patent Literature

Patent Document 1: WO 2009/072444 A1
Patent Document 2: JP 2012-139059 A

SUMMARY

Technical Problem

Patent Document 1 and Patent Document 2 describe the power supply devices whose main target is a power transmission line installed outdoors, but do not describe power loss of the power supply devices associated with rain, dew condensation, and snow accretion.

Therefore, in the conventional power supply devices, there is a problem that when wet snow adheres, an additional capacitance C formed by snow accretion and a resistance component R of the snow accretion equivalently form a series circuit, resulting in that Joule loss generated by current flowing through the snow accretion resistance component R (hereinafter referred to as "CR loss") reaches several hundred milliwat (mW), and power supply to a load becomes unstable.

The present invention has been made to solve the above-mentioned problem, and aims at providing a power supply device that can effectively suppress the occurrence of power loss due to CR loss and obtain a stable output that does not depend on the weather.

Solution to Problem

A power supply device according to the present invention is provided with: an induction electrode that is disposed to be opposed to an overhead electric wire laid on a supporting structure of a power transmission line; a support that is secured to the supporting structure of the power transmission line and supports the induction electrode; a transformer that is connected in parallel to a stray capacitance between the induction electrode and a ground and steps down a primary voltage to output a secondary voltage; a capacitor that is connected in parallel to a secondary winding on a secondary side of the transformer; and an output section that is drawn from both ends of the secondary side of the transformer and supplies power to a load in a state where a parallel circuit including the stray capacitance and the capacitor as well as an excitation susceptance of the transformer is operated as a parallel resonance circuit, wherein the support is provided with: an elongated body that has one end secured on a side of the supporting structure of the power transmission line and another end disposed spaced apart from the supporting structure of the power transmission line to support the induction electrode; and a snow accretion preventing section that is disposed on the intermediate portion of the elongated body and has a gap between the snow accretion preventing section and the elongated body, the gap opening in a downward direction along which the elongated body extends.

Advantageous Effects of Invention

In the power supply device according to the present invention, even if an additional capacitance C formed by snow accretion and a resistance component R of the snow accretion equivalently form a series circuit when wet snow adheres, a creeping resistance, further connected in series, due to the gap of the snow accretion preventing section becomes infinite ($\infty$), so that it is possible to suppress the occurrence of power loss and dramatically improve the output stability.

BRIEF DESCRIPTION OF DRAWINGS

FIG. 1A is a schematic diagram showing a schematic configuration of a power supply device according to the first embodiment;
FIG. 1B is a cross-sectional view showing an internal configuration of the power supply device shown in FIG. 1A;
FIG. 1C is an explanatory view for explaining an example of an installation location of the power supply device on a supporting structure of a power transmission line;
FIG. 2A is a circuit diagram showing an example of an equivalent circuit of the power supply device shown in FIGs. 1A-1C;
FIG. 2B is a circuit diagram showing an equivalent circuit in a state where a parallel circuit in the equivalent circuit shown in FIG. 2A is resonated;
FIG. 2C is an explanatory view for explaining a loss of current when an induction electrode is opposed to an overhead electric wire;
FIG. 3A is an explanatory diagram for explaining experimental equipment for a snow accretion experiment;
FIG. 3B is a perspective view showing a schematic configuration of a power supply device used for the snow accretion experiment;
FIG. 4A is a graph showing the transition of an output value in the snow accretion experiment;
FIG. 4B is an explanatory diagram for explaining the output value of the graph shown in FIG. 4A;
FIG. 5A is a schematic diagram of the power supply device used for the snow accretion experiment;
FIG. 5B is a schematic diagram of the power supply device shown in FIG. 5A subjected to snow accretion;
FIG. 6A shows an equivalent circuit of a circuit newly formed by the snow accretion in the power supply device shown in FIG. 5B;
FIG. 6B shows a simplified equivalent circuit of the equivalent circuit shown in FIG. 6A;
FIG. 6C is an explanatory diagram for explaining equivalent conversion between a series circuit of C-R and a parallel circuit of $C_p$-$R_p$;
FIG. 7 is a graph showing a relationship between a capacitance $C_{SL}$, a resistance $R_{SL}$, and a power loss P;
FIG. 8A is a schematic diagram showing a schematic configuration of a power supply device according to the second embodiment;
FIG. 8B is a cross-sectional view showing an internal configuration of the power supply device shown in FIG. 8A;
FIG. 9A is an explanatory view showing a schematic configuration of a power supply device according to the third embodiment;
FIG. 9B is an explanatory view showing a schematic configuration of an elongated body shown in FIG. 9A;
FIG. 10A is a perspective view showing an internal configuration of the power supply device shown in FIG. 9A;
FIG.10B is a perspective view showing the inside of a cover of a snow accretion preventing section shown in FIG. 9A;
FIG. 11A is a front view and a rear view of the cover of the snow accretion preventing section shown in FIG. 9A;
FIG. 11B is a left side view and a right side view of the cover of the snow accretion preventing section shown in FIG. 9A;
FIG. 11C is a plan view of the cover of the snow accretion preventing section shown in FIG. 9A;
FIG. 11D is a bottom view of the cover of the snow accretion preventing section shown in FIG. 9A;
FIG. 12 is a wiring diagram showing a wiring situation inside the snow accretion preventing section shown in FIG. 9A;

FIG. 13A is an explanatory view for explaining an example of a difference (offset) in length between cross arm members in a power transmission steel tower;

FIG. 13B is an explanatory view for explaining an example of an installation location of a power supply device on a supporting structure of a power transmission line;

FIG. 13C is a schematic diagram showing a schematic configuration of a power supply device according to another embodiment;

FIG. 13D is a cross sectional view showing an internal configuration of the power supply device; and

FIGs. 14A-14C are schematic diagrams showing modified examples of an air gap of a snow accretion preventing section of the power supply device according to the other embodiment.

DESCRIPTION OF EMBODIMENTS

(First Embodiment of Invention)

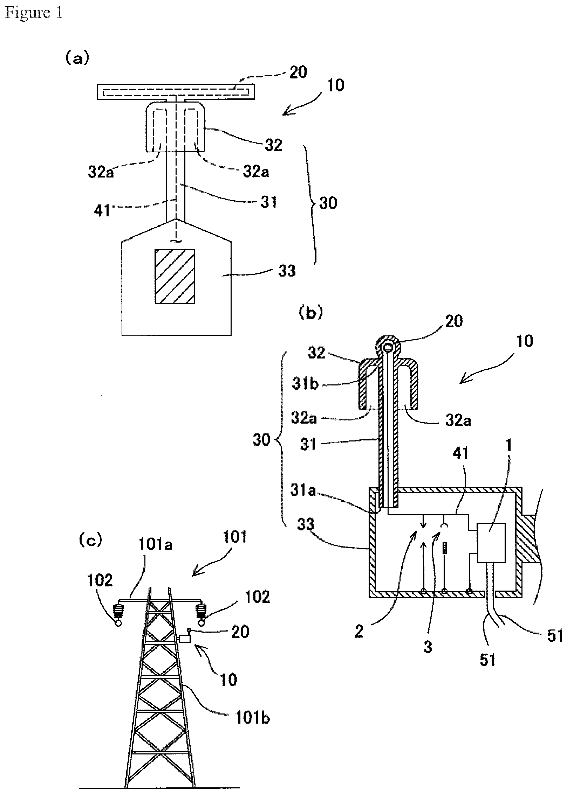

As shown in FIGs. 1A-1C and 2A-2C, a power supply device 10 according to the present embodiment is provided with: a long induction electrode 20 that is disposed to be opposed, substantially parallel in its longitudinal direction, to an overhead electric wire 102 laid on a supporting structure 101 of a power transmission line; a support 30 that is secured to the supporting structure 101 of the power transmission line and supports the induction electrode 20; a transformer (TR) 1 that is connected in parallel to a stray capacitance (hereinafter referred to as "ground capacitance Co of the induction electrode 20") between the induction electrode 20 and the ground 300 and steps down a primary voltage (e.g., AC 13 kVrms) to output a secondary voltage (e.g., AC 130 Vrms); a capacitor $C_1$ that is connected in parallel to a secondary winding on a secondary side of the transformer 1; an input section 40 that is composed of an electric insulated wire, for example, and has one end (one end side of a primary side of the transformer 1) connected to the induction electrode 20 and another end (another end side of the primary side of the transformer 1) connected to ground; and an output section 50 that is composed of an electric insulated wire, for example, and is drawn from both ends of the secondary side of the transformer 1 and supplies power to a load 200 in a state where a parallel circuit including the ground capacitance Co of the induction electrode 20 and the capacitor $C_1$ as well as an excitation susceptance of the transformer 1 is operated as a parallel resonance circuit.

In addition, although not shown in FIGs. 1A-1C, the capacitor $C_1$ that is connected in parallel to the secondary winding on the secondary side of the transformer 1 is disposed in a control box (control circuit) of the power supply device 10, for example.

The material of the induction electrode 20 is not limited to metal such as stainless steel, but conductive or semiconductive synthetic resin may be used instead, as long as an electrostatic induction effect is generated by a capacitance (hereinafter referred to as "synthetic capacitance $C_N$") obtained by synthesizing a stray capacitance $C_A$ between an A-phase overhead electric wire 102 and the induction electrode 20, a stray capacitance $C_B$ between a B-phase overhead electric wire 102 and the induction electrode 20, and a stray capacitance Cc between a C-phase overhead electric wire 102 and the induction electrode 20. In the present embodiment, an aluminum pipe having an outer diameter of 40 mm, an inner diameter of 34 mm, and a length of 2 m is used.

The support 30 is provided with: an elongated body 31 that has one end 31a secured on the power transmission line supporting structure 101 side and another end 31b disposed spaced apart from the supporting structure 101 of the power transmission line to support the induction electrode 20; and a snow accretion preventing section 32 that is disposed on an intermediate portion of the elongated body 31 and has a gap 32a between the snow accretion preventing section 32 and the elongated body 31, the gap 32a opening in a downward direction along which the elongated body 31 extends.

That is, as long as the snow accretion preventing section 32 constituting the support 30 is configured to be disposed on the intermediate portion of the elongated body 31 and have the gap 32a, which opens in a downward direction along which the elongated body 31 extends, between the snow accretion preventing section 32 and the elongated body 31, it is not particularly limited which is the extending direction of the elongated body 31, upward (upward direction) or downward (downward direction).

Here, since a major steel tower is designed to have a short distance between a power transmission line and a main column of the steel tower, the power supply device 10 is installed on a steel tower main column (main column member 101b) out of a steel tower cross arm (cross arm member 101a) constituting a steel tower (the supporting structure 101 of the power transmission line) and the steel tower main column (main column member 101b), and is also installed such that the elongated body 31 extends in a direction (upward) toward the power transmission line, as shown in FIG. 1C. By this arrangement, it is possible to obtain a stronger electric field intensity from the power transmission line, resulting in that power obtained by the power supply device 10 can be increased.

In this case, the elongated body 31 extends upwardly to dispose the induction electrode 20 at the other end 31b of the elongated body 31, and the snow accretion preventing section 32 may be configured such that the gap 32a opens in the downward direction toward the one end 31 a of the elongated body 31.

That is, the support 30 may be provided with: an elongated body 31 that has one end 31a secured on a side of the supporting structure 101 of the power transmission line and another end 31b disposed spaced apart from the supporting structure 101 of the power transmission line; and a snow accretion preventing section 32 that is connected to the other end 31b of the elongated body 31, supports the induction electrode 20, disposed below the induction electrode 20, and has a gap 32a between the snow accretion preventing section 32 and the elongated body 31.

As shown in FIGs. 1A and 1B, the support 30 according to the present embodiment is an umbrella-shaped body formed by integrally molding a cylindrical elongated body 31 and a domed snow accretion preventing section 32 in fiberglass reinforced plastic (FRP), in which the induction electrode 20 is disposed above the snow accretion preventing section 32, and an electric insulated wire (high-voltage insulated wire 41) connected to the induction electrode 20 is disposed inside the elongated body 31. With respect to the FRP, the presence or absence of surface processing treatment is not particularly limited, but it is more preferably to use surface-processed FRP by such a known technique as to increase water repellency of the surface. For example, the surface of the FRP may be coated with polymers such as ethylene-vinyl acetate copolymer (EVA), or silicones. By this processing treatment, moisture on the surface is easily repelled and removed, so that it is possible to suppress degradation of electrical resistance characteristics of the FRP due to moisture permeation, and electrical loss caused thereby.

Further, the support 30 according to the present embodiment is provided with a housing 33 that is provided between the one end 31a of the elongated body 31 and the supporting structure 101 of the power transmission line and includes the transformer 1 therein.

The housing 33 is a box-like body having a triangular roof with its upper surface inclined to suppress snow accretion as shown in FIG. 1A, and is made from metal to connect the other end side of the primary side of the transformer 1 to ground.

Further, the power supply device 10 according to the present embodiment is connected between the one end side (high-voltage side) of the primary side of the transformer 1 and the other end side (ground side) of the primary side of the transformer 1, and is provided with an arcing horn (a discharge electrode) 2 for discharging a high voltage induced by lightning strike to suppress a voltage and a so-called "short earth" (a short-circuit grounding mechanism) 3 for preventing an electric shock of an operator.

Here, in the transformer 1, a hypothetical transformer making the following five assumptions is referred to as an ideal transformer 1a: the first assumption is that all magnetic fluxes pass through only in an iron core and interlink with both windings; the second assumption is that resistance of the windings can be ignored; the third assumption is that iron loss can be ignored; the fourth assumption is that saturation of the iron core can be ignored; and the fifth assumption is that permeability of the iron core is infinite and an excitation current can be also ignored.

In the ideal transformer 1a, it is assumed that all magnetic fluxes pass through only in the iron core and interlink with the both windings. However, in the actual transformer 1, there are a magnetic flux that interlinks with only a primary winding and does not interlink with a secondary winding and a magnetic flux that interlinks with only the secondary winding and does not interlink with the primary winding, which are referred to as a leakage magnetic flux, in addition to a main magnetic flux that interlinks with both of the primary and secondary windings.

An electromotive force due to such leakage magnetic flux can be handled as a reactance voltage drop caused by inductances respectively connected in series to the primary winding and the secondary winding of the ideal transformer 1a that is free from the leakage magnetic flux. Therefore, expressing a primary leakage reactance by $x_1$ and a secondary leakage reactance by $x_2$, the influence thereof can be represented by the leakage reactances $x_1$ and $x_2$ that are respectively connected in series to the primary winding and the secondary winding of the ideal transformer 1a as shown in FIG. 2A.

In the ideal transformer 1a, it is assumed that resistance of the windings can be ignored. However, in the actual transformer 1, the windings have the resistance, thus accompanying a voltage drop and a copper loss due to the resistance thereof. Therefore, expressing the resistance of the primary winding by $r_1$ and the resistance of the secondary winding by $r_2$, the influence thereof can be represented by resistors $r_1$ and $r_2$ that are respectively connected in series to the primary winding and the secondary winding of the ideal transformer 1 a as shown in FIG. 2A.

Further, in order to form a coupling coil of the primary and secondary coils as the ideal transformer 1a, a path of the excitation current may be just provided in parallel to the primary coil as shown in FIG. 2A. This shunt is composed of a parallel circuit of an excitation conductance go that forms a path of an iron loss current and an excitation susceptance bo that forms a path of a magnetizing current.

Thus, the transformer 1 can be represented by an equivalent circuit including the resistance $r_1$ of the primary winding, the primary leakage reactance $x_1$, the excitation susceptance bo, the excitation conductance go, the ideal transformer 1a, the resistance $r_2$ of the secondary winding, and the secondary leakage reactance $x_2$, as shown in FIG. 2A.

Further, in the transformer 1, a synthetic impedance $Z_1$ composed of the resistance $r_1$ of the primary winding and the primary leakage reactance $x_1$ and a synthetic impedance $Z_2$ composed of the resistance $r_2$ of the secondary winding and the secondary leakage reactance $x_2$ cause small voltage drops. However, these voltage drops are generally very small and exert little influence on the circuit. Thus, these voltage drops can be ignored.

In addition, with respect to the excitation susceptance bo of the transformer 1, the number of turns of the primary winding of the transformer 1 and the characteristics of the core may be properly selected so as to satisfy the condition of parallel resonance of the ground capacitance Co of the induction electrode 20 and the excitation susceptance bo of the transformer 1, as long as the type of the overhead electric wire 102 to which the induction electrode 20 is disposed to be opposed, a specification of the induction electrode 20, and a gap between the induction electrode 20 and the overhead electric wire 102 have been determined. However, the type of the overhead electric wires 102 has, in general, more variety, so that the size of the induction electrode 20 may be sometimes increased depending on necessary electric power and that there often occur such circumstances that the gap between the induction electrode 20 and the overhead electric wire 102 has to be changed depending on the situation of the supporting structure 101. Therefore, it is better at site adaptability to adopt a system in which the impedance of the excitation susceptance bo of the transformer 1 is set to be slightly lower than the assumed impedance of the ground capacitance Co of the induction electrode 20 and [capacitance of] the capacitor $C_1$ on the secondary side of the transformer 1 is increased or decreased for setting a resonance state.

Here, the operation and effect of the power supply device 10 that performs parallel resonance by (i) the ground capacitance Co of the induction electrode 20 and the capacitor $C_1$ on the secondary side of the transformer 1 and (ii) the excitation susceptance bo of the transformer 1, will be described using FIG. 2C.

In the following description, dots to show vectors of voltage V and current I and to be placed above characters will be omitted.

First, power P (= voltage V × current I) supplied to the load 200 is obtained by multiplying a voltage Vo applied to the load 200 (load resistance R) by a current $I_R$ flowing through the load 200 (load resistance R).

On the other hand, charging currents from the overhead electric wire 102 of respective phases (phase A, phase B, and phase C) are subjected to vector synthesis to flow through the ground capacitance Co of the induction electrode 20 and the load resistance R as a charging current $I_{C0}$ and the current $I_R$, respectively, as shown in FIG. 2C. However, since the ground capacitance Co of the induction electrode 20 exists in parallel to the load resistance R, a parallel synthetic impedance decreases and, as a result, most of a voltage $V_E$ is applied to the synthetic capacitance $C_N$ and only a small voltage is applied to the load resistance R, so that sufficient electric power cannot be obtained.

Therefore, by performing the parallel resonance by (i) the ground capacitance Co of the induction electrode 20 and the capacitor $C_1$ on the secondary side of the transformer 1 and (ii) the excitation susceptance bo of the transformer 1 to electrically cancel out the charging current $I_{C0}$ flowing through the ground capacitance Co of the induction electrode 20, the voltage Vo, applied to the load 200 (load resistance R), obtained by voltage dividing with the synthetic capacitance $C_N$ as a high impedance of only the load resistance R is kept to the maximum.

As a result, the circuit can be regarded as a simple equivalent circuit as shown in FIG. 2B by keeping an impedance at infinity ($\infty$), wherein the impedance is obtained by synthesizing the ground capacitance Co of the induction electrode 20, the excitation susceptance bo of the transformer 1, and a primary side conversion value of the secondary side capacitor $C_1$ of the transformer 1.

In addition, it is possible to extremely reduce a loss due to a current $I_{R0}$ flowing through an iron loss resistance Ro (the excitation conductance go) by winding the primary winding of the transformer 1 at several tens of thousands to several hundreds of thousands times.

Therefore, in the power supply device according to the present embodiment, almost all of the current flows through the load 200, so that the power supply device 10 with high current inflow efficiency with respect to the load 200 can be obtained.

Next, the operation and effect of the snow accretion preventing section 32 according to the present embodiment will be described using an experimental result of a snow accretion experiment on a power supply device 310 that is not provided with the snow accretion preventing section 32. The snow accretion experiment was conducted during winter season (from December 29, 2014 to January 5, 2015).

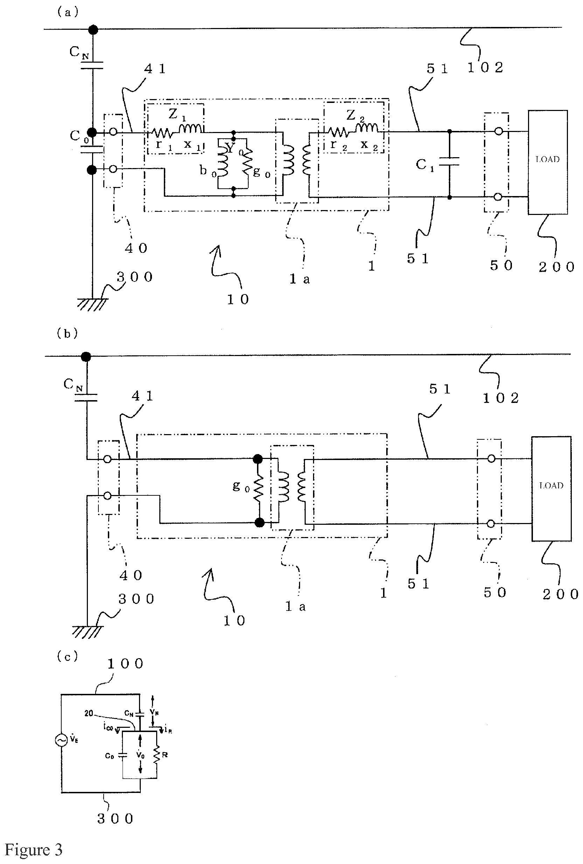

The power supply device 310 used for the snow accretion experiment is provided with: three induction electrodes 311 having a length of 2.3 m that are disposed to be opposed to the overhead electric wire 102 substantially in a parallel manner; a housing 312 that contains a transformer for stepping down a voltage induced in the induction electrodes 311; and a mounting bracket 313 that fixes the induction electrodes 311 and the housing 312 to the supporting structure 101 (the main column member 101b of the power transmission steel tower), as shown in FIG. 3B. The induction electrodes 311 and the housing 312 are connected by an insulating arm(s) 314, and the surface of the arm 314 is covered with a tube made of fluorine resin. Further, a disk(s) 315 made of fluorine resin is attached to the arm 314 to prepare a certain countermeasure against rain, dew condensation, and snow accretion.

In experiment equipment for the snow accretion experiment, the power supply device 310, a camera 320 for taking an image of a snow accretion state of the power supply device 310, and a projector 330 for illuminating the power supply device 310 are attached to the supporting structure 101 (the main column member 101b of the power transmission steel tower) in the vicinity of the overhead electric wire 102 (lowest phase jumper wire), as shown in FIG. 3A.

The power supply device 310 is connected via a lead cable 341 to a power supply device control box (control circuit) 317, which is connected to a monitoring box 342 having a gateway, a data logger, and a 3G network antenna.

The camera 320 is connected to the monitoring box 342 via a camera cable 321.

Commercial power is supplied to the monitoring box 342 via a distribution line 343, a low-voltage service wire 344, a distribution board 345 having a so-called tie transformer installed therein, and a service cable 346.

The commercial power is also supplied to the camera 320 and the projector 330 from the monitoring box 342 via an AC 100 V power line 347 and a branch box 348.

The monitoring box 342 transmits imaging data of the power supply device 310 and measured data of an output (supply power) from the power supply device 310.

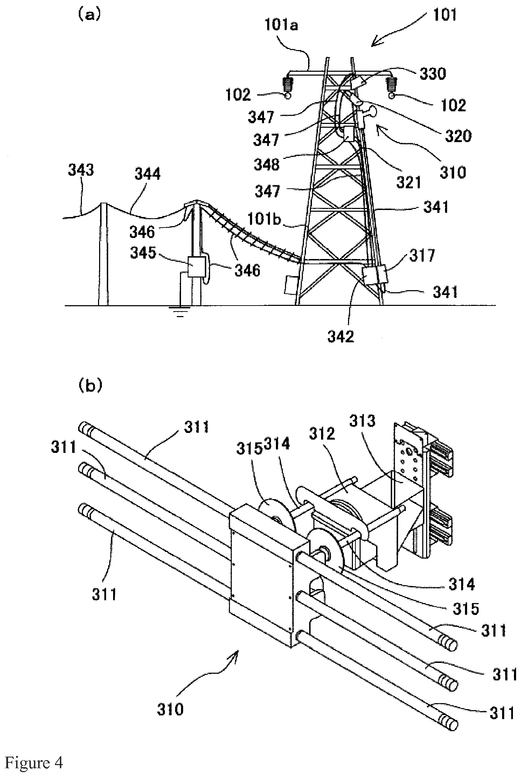

FIG. 4A is a graph showing an experimental result of the snow accretion experiment.

In FIG. 4A, the horizontal axis shows the observation date and time, and the vertical axis shows the supply power [W] from the power supply device 310, which is plotted at intervals of once every 15 minutes.

Table 1 below is a table showing a relationship between the snow accretion state of the power supply device 310 and the supply power from the power supply device 310.

[Table 1]

| Observation Date and Time | Snow Accretion State | Supply Power |
|---|---|---|
| 2014/12/29 12:02 | No snow accretion occurs. | 1.1 W |
| 2015/01/01 00:02 | Snow blows from the back side of the disk. | Approximately 0.7 W |
| 2015/01/01 09:47 | Overall snow accretion occurs. | Approximately 0.5 W |
| 2015/01/01 13:02 | The arm is completely covered with snow. | 0 W |
| 2015/01/02 11:17 | Connection of snow on the arm expires. | Approximately 1.0 W |
| 2015/01/02 17:02 | Snow on the arm almost melts down. | Approximately 1.1 W |
| 2015/01/02 20:17 | Snow accretion occurs again. | Approximately 0.9 W |
| 2015/01/03 09:17 | Snow on the arm slightly connects. | Approximately 0.7 W |
| 2015/01/03 11:18 | Connection of snow on the arm completely cuts out. | Approximately 1.1 W |

In the snow accretion experiment, a circuit shown in FIG. 4B was used to measure the output from the power supply device 310.

In FIG. 4 (b), $V_{AC}$ is a voltage (alternating current: AC) obtained by stepping down a voltage induced in the induction electrodes 311 by the transformer; $V_{DC}$ is a voltage obtained by converting the alternating current to a direct current (DC) at a rectifier bridge; C is a capacitor connected to a secondary side of the rectifier bridge and used for smoothing a voltage waveform; $I_1$ is a current flowing through a control circuit; $I_2$ is a current flowing through a Zener diode; R is a current sensing resistor; and $V_{OUT}$ is a voltage of an output section.

In FIG. 4B, when a load is not connected to the output section, the current $I_1$ becomes minute and most of the current flowing through the entire circuit flows through the Zener diode, so that the power supply amount of the circuit becomes approximately equal to the power consumption at the Zener diode and the current sensing resistor R.

Therefore, the output value in the graph as shown in FIG. 4A is a supply power obtained by calculating, from a voltage value of the current sensing resistor R, a value of the current flowing through the Zener diode that is provided for dissipating unloaded power continuously supplied to the circuit as heat, and multiplying the calculated current value by a value of the voltage $V_{DC}$.

In addition, there were a time period during which the supply power decreased when the amount of snow accretion was large as well as a time period during which the supply power remarkably decreased even when the amount of snow accretion was relatively small, as shown in FIG. 4A and Table 1.

Therefore, we have examined a mechanism that causes power loss at the time of snow accretion.

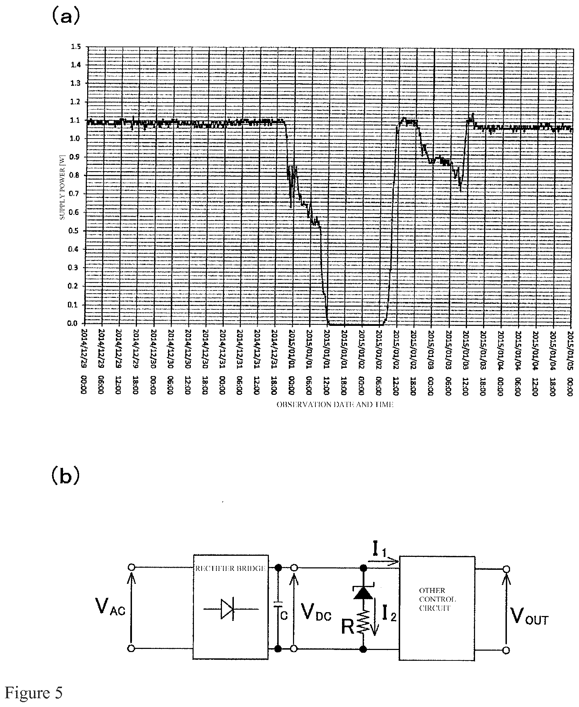

First, FIG. 5A shows a schematic diagram of the power supply device 310 that was used to perform the snow accretion experiment.

In FIG. 5A, since a high potential part (high-voltage insulated wire 316) from an electrode part (induction electrodes 311) to a wiring of the transformer (high-voltage TR) reaches approximately 13 kV as an AC effective value, it is covered with an insulator to prevent an electric shock of an operator. Further, the housing 312 is a box made of metal and is connected to a steel tower, so that the housing 312 has a ground potential. Further, in FIG. 5A, an induced voltage E is a potential difference generated between the high potential part and the ground potential part.

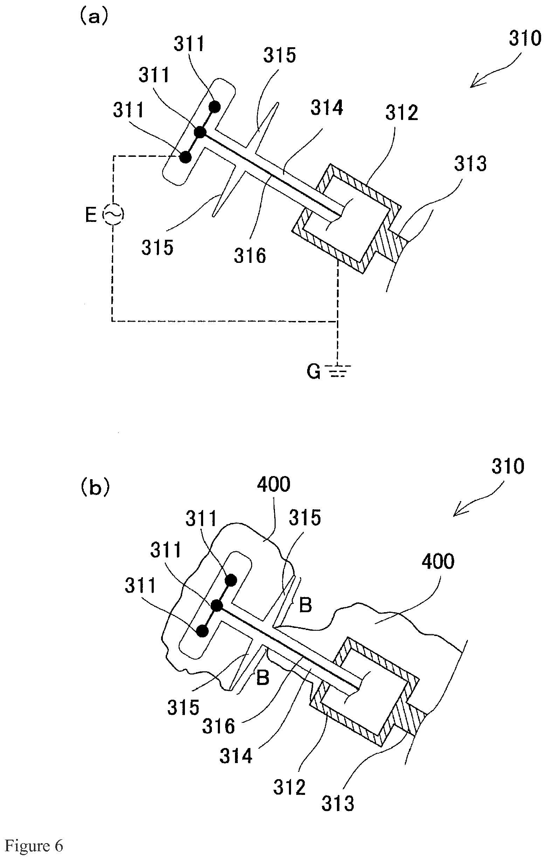

Here, FIG. 5B shows a schematic diagram of the power supply device 310 subjected to snow accretion on the surface of the insulator, and FIG. 6A shows an equivalent circuit of a circuit newly formed by the snow accretion in the power supply device 310 in the case of FIG. 5B. In addition, in FIG. 5B, a portion denoted by reference character B is a portion that is not subjected to snow accretion.

Further, in FIG. 6A, $C_{SH}$ is a capacitance formed between the electrode part (induction electrodes 311) and snow 400 adhering to the periphery thereof, and $R_{SH}$ is a resistance value of the snow 400 adhering to the electrode part (induction electrodes 311) side. In addition, the capacitance $C_{SH}$ has a relatively large value because the induction electrodes 311 are long.

Further, in FIG. 6A, $C_{SL}$ is a capacitance formed between the high-voltage insulated wire 316 and snow 400 adhering to the periphery thereof by snow 400 adhering to the arm 314, and $R_{SL}$, is a resistance value of snow 400 adhering between the arm 314 and the housings 312.

Further, in FIG. 6A, $R_B$ is a surface resistance of a disk 315 back surface that is not subjected to snow accretion, which is nearly infinite ($\infty$).

In particular, in a series portion of the capacitance $C_{SH}$, the resistor $R_{SH}$, and the resistor $R_B$, the resistance $R_B$ is infinite, so that most of the voltage is applied to the resistance $R_B$ having the infinite resistance value, by series voltage dividing. Consequently, almost no current flows through the series portion of the capacitance $C_{SH}$, the resistor $R_{SH}$, and the resistor $R_B$, and power loss in the series portion of the capacitance $C_{SH}$, the resistor $R_{SH}$, and the resistor $R_B$ becomes almost zero.

Therefore, the series portion of the capacitance $C_{SH}$, the resistor $R_{SH}$, and the resistor $R_B$ can be ignored, and the equivalent circuit shown in FIG. 6A can be represented by a simpler equivalent circuit composed of the capacitance $C_{SL}$ and the resistance $R_{SL}$ as shown in FIG. 6B.

In addition, since the resistance $R_{SL}$ is a resistance of the snow 400 at the time of snow accretion, the resistance $R_{SL}$ drops to the order of roughly several 100 MΩ.

On the other hand, the capacitance $C_{SL}$ can be obtained by the following formula (1), from an outer diameter d [mm] of a conductor of the high-voltage insulated wire 316, a diameter D [mm] and a length of the arm 314, and a relative permittivity $\varepsilon$ ($\approx$ 2.7 (actual measured value)).

Further, the formula (1) can be deformed to the following formula (2), where $L_A$ [mm] is the length of the arm 314.

[Formula 1]

$$C_{SL}[\text{F/mm}] = \frac{\varepsilon}{2 log_e \frac{D}{d}} \times \frac{1}{9} \times 10^{-12} \qquad \cdots (1)$$

[Formula 2]

$$C_{SL}[\text{pF}] = \frac{\varepsilon}{2 log_e \frac{D}{d}} \times \frac{1}{9} \times L_A \qquad \cdots (2)$$

For example, when the relative permittivity $\varepsilon$ is 2.7, the diameter D of the arm 314 is 35 mm, the conductor outer diameter d of the high-voltage insulated wire 316 is 4.1 mm, and the length $L_A$ of the arm 314 is 170 mm ($\varepsilon$ = 2.7, D = 35 [mm], d = 4.1 [mm], $L_A$ = 170 [mm]), the capacitance $C_{SL}$ is calculated to be approximately 12 pF ($C_{SL} \approx$ 12 [pF]) by the formula (2).

Here, a relational expression between a capacitance C, a resistance R, and a power loss P at the time of C-R series connection will be obtained.

First, a series circuit of C-R is replaced by an equivalent parallel circuit of $C_p$-$R_p$, as shown in FIG. 6C.

In this case, an impedance Z and an admittance Y of the series circuit are expressed by the following formula (3), and an admittance $Y_p$ of the parallel circuit is expressed by the following formula (4).

[Formula 3]

$$Z = R + \frac{1}{j\omega C}$$

$$Y = \frac{R}{R^2 + \left(\frac{1}{\omega C}\right)^2} + j\frac{\left(\frac{1}{\omega C}\right)}{R^2 + \left(\frac{1}{\omega C}\right)^2} \quad \cdots (3)$$

[Formula 4]

$$Y_P = \frac{1}{R_P} + j\omega C_P \quad \cdots (4)$$

Further, the following formula (5) can be calculated from the formulas (3) and (4).

Further, the following formula (6) can be calculated from a relational expression between a power P, an induced voltage E, and a current I ($P = EI = E^2/R_p$).

[Formula 5]

$$\frac{1}{R_P} = \frac{R}{R^2 + \left(\frac{1}{\omega C}\right)^2} \quad \cdots (5)$$

[Formula 6]

$$P = \frac{RE^2}{R^2 + \left(\frac{1}{\omega C}\right)^2} \quad \cdots (6)$$

If the respective values of the capacitance C and the resistance R of the series circuit are known, the power loss P [W] can be calculated by the equation (6).

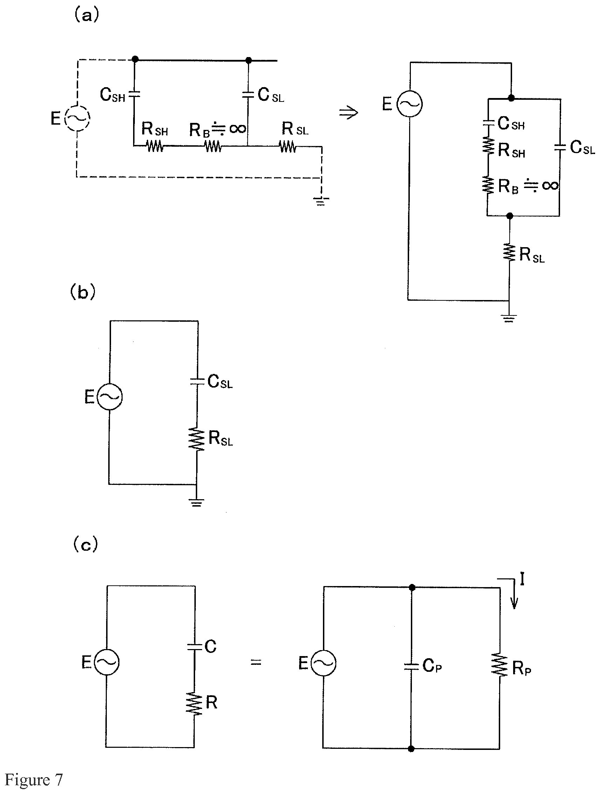

FIG. 7 shows a graph obtained by calculating a relationship between a capacitance $C_{SL}$, a resistance $R_{SL}$, and a power loss P, based on the formula (6).

In addition, the graph shown in FIG. 7 is obtained by: converting the formula (6) to the following formula (7); fixing the power loss P to 0.01 [W] (P = 0.01), for example; sequentially entering different values in the resistance R ($R_{SL}$) to obtain the capacitance C ($C_{SL}$); arranging the relationship between the resistance $R_{SL}$ and the capacitance $C_{SL}$ in a table; and showing the table graphically.

[Formula 7]

$$C = \frac{1}{\omega}\sqrt{\frac{P}{R(E^2 - PR)}} \qquad \cdots (7)$$

Further, in FIG. 7, the downward arrow ($\downarrow$) indicates the transition of the power loss when the resistance $R_{SL}$ decreases due to snow accretion, when the capacitance $C_{SL}$ is 12 pF ($C_{SL}$ = 12 pF).

In addition, a similar phenomenon will occur even when the capacitance $C_{SL}$ has a large value equal to or more than 12 pF, as is apparent from FIG. 7.

Here, in the induction electrodes 311 and the high-voltage insulated wire 316, capacitances $C_{SH}$ and $C_{SL}$ with the order of at least several 10 pF are formed at the time of snow accretion, though depending on the size of the induction electrodes 311.

Therefore, it is found to be necessary to maintain the resistance $R_{SL}$ at a resistance value of at least $10^9$ $\Omega$ or more, preferably $10^{10}$ $\Omega$ or more, to suppress the power loss.

In addition, the surface resistance $R_B$ at the time of snow accretion remarkably decreases when the snow accretion begins to melt, and is maintained at the order of $10^8$ $\Omega$ when the temperature is maintained at a range of 0 °C to 2 °C, where sherbet-like snow remains adhering to the disk 315 back surface.

Further, in this snow accretion experiment, it has been described the mechanism that causes power loss at the time of snow accretion when the portion denoted by reference character B shown in FIG. 5B is not subjected to snow accretion. However, when a wind direction of an experiment site shifts and snow adheres to the back surface of the disk 315, a value of the capacitance C will become much larger than the experimental result of this time, and the phenomenon on the right side of the graph from the downward arrow ($\downarrow$) shown in FIG. 7 will occur.

Therefore, in the power supply device 310 used in the snow accretion experiment, a reason why the power loss occurs even though the induction electrodes 311 and the arm 314 are insulated with the insulator, is due to the C-R series connection at the time of snow accretion. Consequently, when considering countermeasures for suppressing power loss, it is important to provide the power supply device 310 with a creepage surface that is not subjected to snow accretion on at least a part thereof. In particular, it is preferable to be able to withstand snow accretion on the side of the power supply device 310 associated with a crosswind.

As described above, the power supply device 10 according to the present embodiment is provided with the snow accretion preventing section 32 that is disposed on an intermediate portion of the elongated body 31 and has the gap 32a between the snow accretion preventing section 32 and the elongated body 31, thereby preventing snow accretion in the vicinity of the gap 32a, and separating the snow adhering to the periphery of the induction electrode 20 from the snow adhering to the periphery of the arm (the elongated body 31 of the support 30) to generate an infinite surface resistance by the separated portion, resulting in that it is possible to suppress CR loss caused by the resistance R of the snow adhering to the periphery of the induction electrode 20 and the capacitance C between the induction electrode 20 and the snow accretion.

In particular, by making the extending direction of the elongated body 31 of the support 30 substantially perpendicular to the ground 300, the power supply device 10 can maximize the operation and effect of the snow accretion preventing section 32 of the umbrella-shaped body.

(Second Embodiment of the Present Invention)

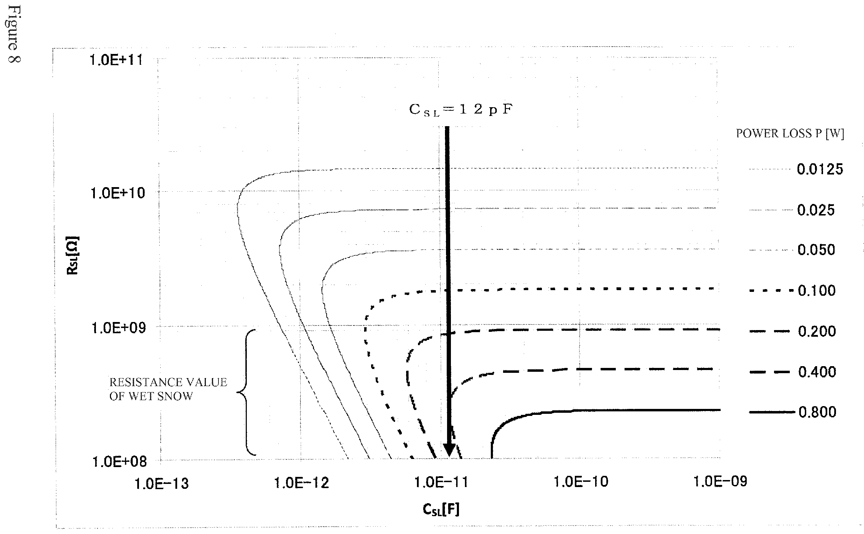

FIG. 8A is a schematic diagram showing a schematic configuration of a power supply device according to the second embodiment, and FIG. 8B is a cross-sectional view showing an internal configuration of the power supply device shown in FIG. 8A. In FIGs. 8A and 8B, the same reference numerals as those in FIGs. 1A to 7 indicate the same or corresponding parts, and description thereof will be omitted.

The snow accretion preventing section 32 of the support 30 according to the present embodiment is provided with an enclosed space 32b above the gap 32a, and enclosed space 32b includes the transformer 1, the arcing horn 2, and the short earth 3 therein, as shown in FIGs. 8A and 8B.

In addition, although not shown in FIGs. 8A and 8B, the capacitor $C_1$ that is connected in parallel to the secondary winding on the secondary side of the transformer 1 is disposed in the control box (control circuit) of the power supply device 10, for example, as is the case with the first embodiment.

The second embodiment is different from the first embodiment only in that the transformer 1 is included in the enclosed space 32b of the snow accretion preventing section 32. The second embodiment provides the operation and effect similar to those of the first embodiment except for the operation and effect due to including of the transformer 1 in the enclosed space 32b of the snow accretion preventing section 32.

In the power supply device 10 according to the first embodiment as described above, the housing 33 includes the transformer 1, the arcing horn 2, and the short earth 3 therein, so that an outer shape of the housing 33 becomes larger, and it tends to have snow on the top of the housing 33, and there is a risk that the snow adhering to the periphery of the induction electrode 20 is connected with the snow adhering to the periphery of the arm (the elongated body 31 of the support 30). In this case, the power supply device 10 according to the first embodiment cannot generate the infinite surface resistance, so that there is a possibility that the power loss due to the CR loss cannot be suppressed.

On the other hand, the power supply device 10 according to the present embodiment includes the transformer 1 in the enclosed space 32b of the snow prevention unit 32, thereby resulting in a structure such that the housing 33 below the gap 32a is eliminated to suppress snow accretion below the gap 32a and the high-voltage insulated wire 41 on the primary side of the transformer 1 is not disposed below the gap 32a.

Here, when snow accretion occurs on the periphery of a low-voltage cable 51 on the secondary side of the transformer 1, a capacitance between the low-voltage cable 51 and the snow accretion is generated, but a voltage between the low-voltage cable 51 and the ground 300 is low, so that the resultant power loss is extremely small and can be ignored.

That is, in the power supply device 10 according to the present embodiment, the high-voltage insulated wire 41 is not disposed below the gap 32a (the low-voltage cable 51 is disposed below the gap 32a), so that even when snow accretion occurs on the periphery of the elongated body 31 under the gap 32a, it is possible to suppress the CR loss due to the capacitance between the low-voltage cable 51 and the snow accretion and the resistance of the snow to an ignorable level.

(Third Embodiment of the Present Invention)

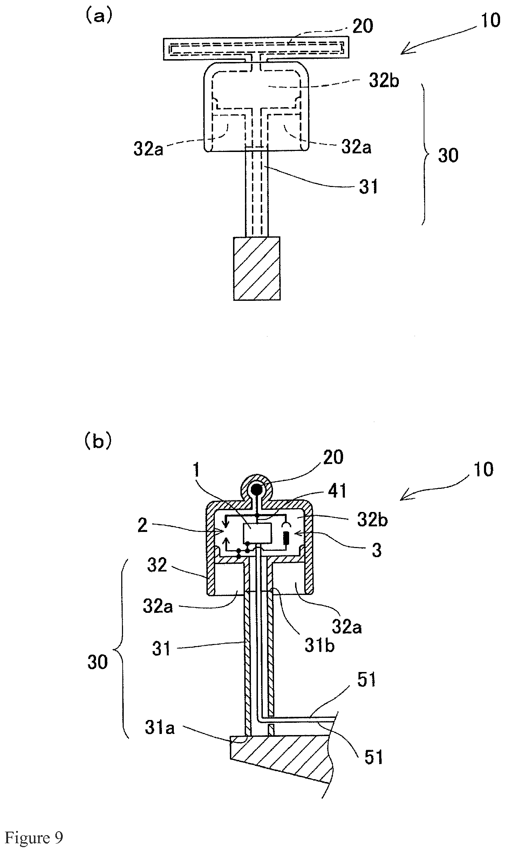

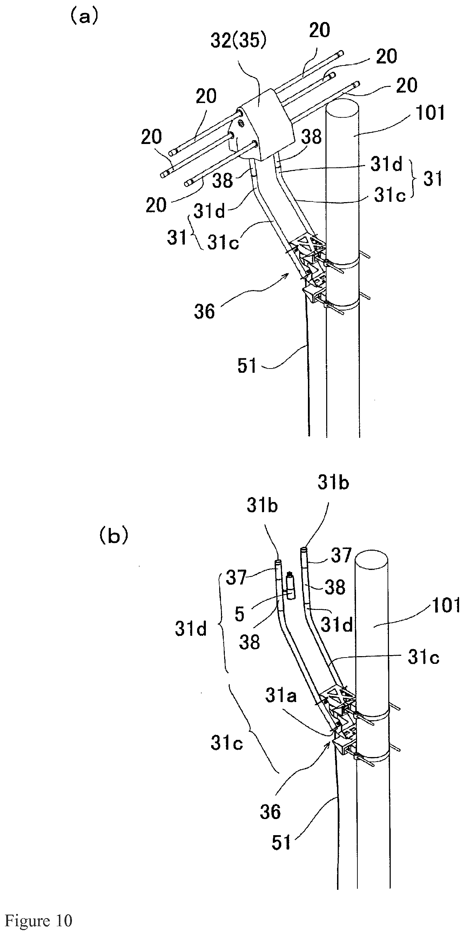

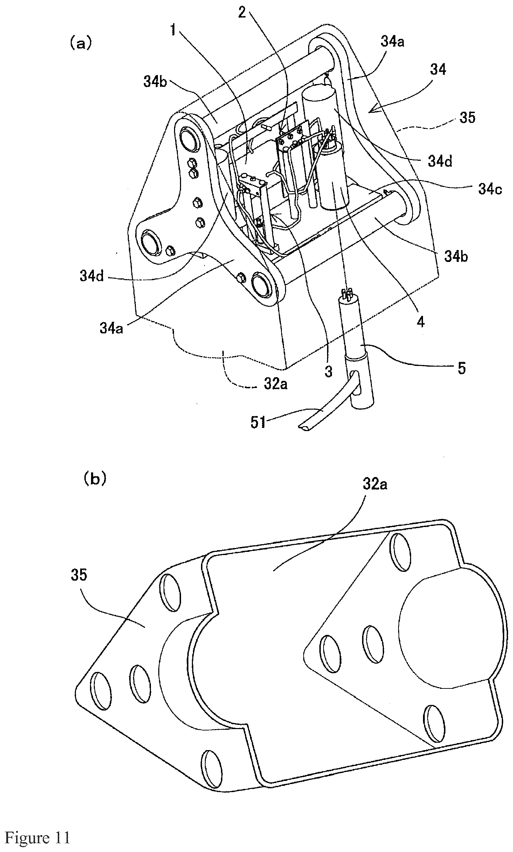

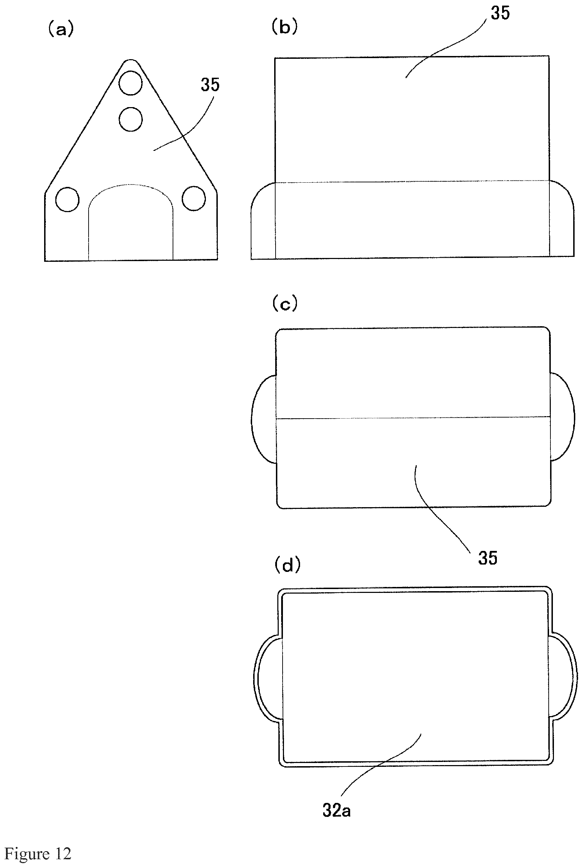

FIG. 9A is an explanatory view showing a schematic configuration of a power supply device according to the third embodiment, and FIG. 9B is an explanatory view showing a schematic configuration of an elongated body shown in FIG. 9A. FIG. 10A is a perspective view showing an internal configuration of the power supply device shown in FIG. 9A, and FIG. 10B is a perspective view showing the inside of a cover of a snow accretion preventing section shown in FIG. 9A. FIG. 11A is a front view and a rear view of the cover of the snow accretion preventing section shown in FIG. 9A, FIG. 11B is a left side view and a right side view of the cover of the snow accretion preventing section shown in FIG. 9A, FIG. 11C is a plan view of the cover of the snow accretion preventing section shown in FIG. 9A, and FIG. 11D is a bottom view of the cover of the snow accretion preventing section shown in FIG. 9A. FIG. 12 is a wiring diagram showing a wiring situation inside the snow accretion preventing section shown in FIG. 9A. In FIGs. 9A to 12, the same reference numerals as those in FIGs. 1A to 8B indicate the same or corresponding parts, and description thereof will be omitted.

The snow accretion preventing section 32 according to the present embodiment is composed of: a mounting 34 that mounts the transformer 1, the arcing horn 2, and the short earth 3, as well as a low-voltage outlet 4 for connecting to the low-voltage cable 51 outside of the snow accretion preventing section 32 and that disposes three pairs of induction electrodes 20 at equal intervals (positions of apexes of an equilateral triangle) in parallel with a longitudinal direction of the induction electrodes 20, wherein two induction electrodes 20 on the same straight line are regarded as one pair; and an FPR-made cover 35 that covers the mounting 34 except for its bottom, as shown in FIGs. 9A to 12.

In addition, the mounting 34 according to the present embodiment is provided with: two plate-like bodies 34a that each project in three directions at an angle of 120 degrees therebetween; three tubular bodies 34b that each connect respective apexes of the two plate-like bodies 34a; a bottom plate 34c that is disposed between two of the tubular bodies 34b and forms a bottom surface of the mounting 34, as shown in FIG. 10A.

The tubular bodies 34b of the mounting 34 are each provided substantially in the center thereof with a metallic connection 21 that is threaded at its both ends, as shown in FIG. 12. One ends of the induction electrodes 20 having a diameter of 35 mm are threadedly engaged with the respective connections 20. A distance between both ends of each pair of two induction electrodes 20 is 2 m.

Further, the cover 35 opens at its bottom, is in the shape of a house having a triangular roof along the arrangement of the three pairs of induction electrodes 20, and has the gap 32a under the mounting 34, as shown in FIGs. 10B to 11D. Since the cover 35 is in the shape of the house having the triangular roof as described above, it is possible to make an outer shape of the top of the cover 35 as small as possible along the arrangement of the three pairs of induction electrodes 20, and to ensure an opening area of the bottom of the cover 35.

Further, the elongated body 31 of the support 30 according to the present embodiment is provided with: an inclined part 31c that is inclined with respect to the ground 300 and includes one end 31a; and a vertical part 31d that is substantially perpendicular to the ground 300 and includes the other end 31b, the one end 31a being fixed to the supporting structure 101 (more specifically, the main column member 101b) of the power transmission line, as shown in FIG. 9B.

Further, the one end 31a of the elongated body 31 is fixed to the supporting structure 101 by using a mounting bracket 36 having a horizontal angle adjustment function. The low-voltage cable 51 disposed inside the elongated body 31 is drawn from the one end 31a and connected to a control circuit (not shown) to supply electric power.

Further, an FPR-made pipe 37 is attached to the other end 31b of the elongated body 31, and the resultant is covered with a tube 38 made of fluorine resin, so that it is possible to reduce power loss associated with wetting due to such as rain and dew.

In addition, the power supply device 10 according to the present embodiment is installed by attaching the support 30 to the supporting structure 101 of the power transmission line with the mounting bracket 36, as shown in FIG. 9B, and then fitting the other end 31b of the elongated body 31 to an installation holder 34d of the mounting 34 of the snow accretion preventing section 32 and inserting a low-voltage plug 5 to be connected to the low-voltage cable 51 into the low-voltage outlet 4, as shown in FIG. 9A.

Further, the transformer 1 according to the present embodiment is hermetically sealed by a silicone rubber casting method to improve the withstand voltage performance.

In addition, although not shown in FIGs. 9A to 12, the capacitor $C_1$ that is connected in parallel to the secondary winding on the secondary side of the transformer 1 is disposed in the control box (control circuit) of the power supply device 10, for example, as is the case with the first embodiment.

The third embodiment is different from the second embodiment only in that the elongated body 31 of the support 30 is provided with the inclined part 31c and the vertical part 31d. The third embodiment provides the operation and effect similar to those of the second embodiment except for the operation and effect due to the inclined part 31c and the vertical part 31d.

In the power supply device 10 according to the present embodiment, it is possible to separate snow that grows from a fixed portion (the base of the elongated body 31) between the one end 31a of the elongated body 31 and the supporting structure 101 of the power transmission line, from the vertical part 31d, via the inclined part 31c, to further suppress the connection between the snow accretion of the snow accretion preventing section 32 and the snow on the base of the elongated body 31.

In addition, the elongated body 31 (the inclined part 31c, the vertical part 31d) according to the present embodiment is substantially in the shape of the Japanese letter "⌒" where the inclined part 31c is inclined upward from the one end 31a to the vertical part 31d, as shown in FIGs. 9A and 9B. However, the elongated body 31 may be in the shape of the Japanese letter "レ" where the inclined part 31c is inclined downward from the one end 31a to the vertical part 31d.

By this arrangement, the power supply device 10 can guide the growth of snow due to snow accumulation from the base of the elongated body 31 in a downward direction, and still further suppress the connection between the snow accretion of the snow accretion preventing section 32 and the snow on the base of the elongated body 31.

Further, the cover 35 of the snow accretion preventing section 32 has such a roof as the surface (top surface) facing the supporting structure 101 (that is, the main column member 101b) of the power transmission line is an inclined surface and its cross section is substantially an isosceles triangle, as shown in FIG. 11A. However, the cover 35 may have such a roof as the surface facing the supporting structure 101 of the power transmission line is a vertical surface and its cross section is substantially a right triangle.

By this arrangement, the power supply device 10 can slide the snow adhering to the top of the snow accretion preventing section 32 toward the opposite side of the elongated body 31 (the inclined part 31c), and prevent snow accumulation on the elongated body 31 (the inclined part 31c) without dropping the snow on the elongated body 31 (the inclined part 31c).

(Other Embodiments)

In each of the above embodiments, with respect to the major steel tower (the supporting structure 101 of the power transmission line) designed to have the short distance between the power transmission line and the main column of the steel tower, the power supply device 10 is installed on the main column of the steel tower (the supporting structure 101 of the power transmission line), and the elongated body 31 extends in a direction (upward) toward the power transmission line. However, the power supply device 10 is not limited to such a form as described above, but can be flexibly applied to steel towers specific to installation regions and steel towers having a wide variety of forms and utilization forms thereof.

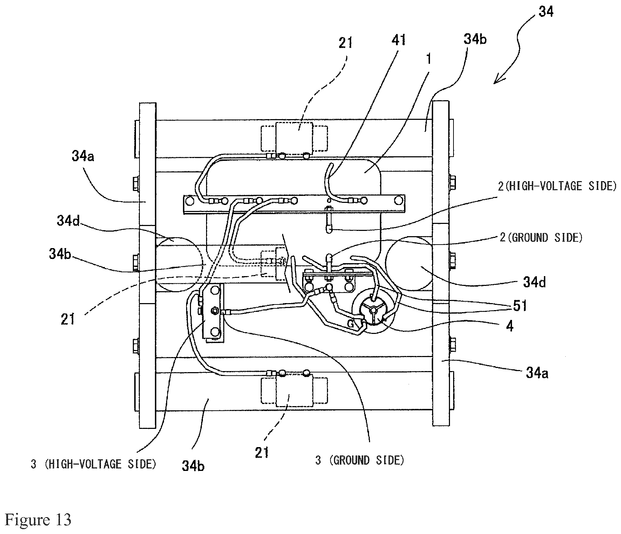

For example, a steel tower (the supporting structure 101) with a high transmission voltage such as 500 kV class is, in general, configured such that a metal pipe with high rigidity is disposed along a jumper wire portion and the metal pipe is pulled up from a tension insulator on either side to suppress sag of a jumper wire and keep the height of the steel tower low. Further, in strong wind regions where wind is strong and electric wires are blown up and in heavy snow regions where a lot of snow and ice are present, a steel tower (the supporting structure 101) is designed such that differences in length between widths (offsets) a, b, and c of the cross arm members 101a constituting the steel tower (the supporting structure 101) becomes large, as shown in FIG. 13A, to prevent an accident caused by a slip jump (a short circuit accident due to a touch of vertical wirings).

In this case, in general, the steel tower is designed such that a distance between the steel tower cross arm (the cross arm member 101a constituting the supporting structure 101 of the power transmission line) and the power transmission line is smaller than a distance between the steel tower main column (the main column member 101b constituting the supporting structure 101 of the power transmission line) and the power transmission line, so that it is preferable to attach the power supply device 10 to the cross arm member 101a of the steel tower from the viewpoint of obtaining a stronger electric power more efficiently, as shown in FIG. 13B.

Here, as described above, as long as the snow accretion preventing section 32 constituting the support 30 is configured to be disposed on the intermediate portion of the elongated body 31 and have the gap 32a, which opens in a downward direction along which the elongated body 31 extends, between the snow accretion preventing section 32 and the elongated body 31, it is not particularly limited which is the extending direction of the elongated body 31, upward (upward direction) or downward (downward direction).

From this, in such a steel tower (the supporting structure 101 of the power transmission line), the distance between the power transmission line and the steel tower cross arm is designed to be shorter than the distance between the power transmission line and the steel tower main column, so that by installing the power supply device 10 in the cross arm member 101 a of the steel tower and installing the power supply device 10 such that the elongated body 31 extends in a direction (downward) toward the power transmission line, it is possible to obtain a stronger electric field intensity from the power transmission line, resulting in that power obtained by the power supply device 10 can be increased.

That is, in the power supply device 10 according to the present embodiment, the elongated body 31 extends downward to dispose the induction electrode 20 at the other end 31b of the elongated body 31, and the snow accretion preventing section 32 may be configured such that the gap 32a opens in the downward direction toward the other end 31b of the elongated body 31, as shown in FIG. 13C.

Further, the support 30 according to the present embodiment is configured such that the induction electrode 20 is disposed under the snow accretion preventing section 32, and the electric insulated wire (the high-voltage insulated wire 41) connected to the induction electrode 20 is disposed inside the elongated body 31, as shown in FIG. 13D.

The power supply device 10 according to the present embodiment is attached under the cross arm member 101a of the steel tower as described above, so that the power supply device 10 is arranged in a region having higher electric field intensity than the case where the power supply device 10 is attached to the main column member 101b of the steel tower, resulting in that high power can be obtained more stably. Further, in this case, even when snow (corresponding to the ground potential) grows from the cross arm member 101a side due to snow accumulation, it is possible to separate the snow adhering to the periphery of the induction electrode 20 from the snow growing from the cross arm member 101a side through the intervention of the gap 32a, and to continuously maintain the high impedance state, resulting in that power loss can be stably suppressed.

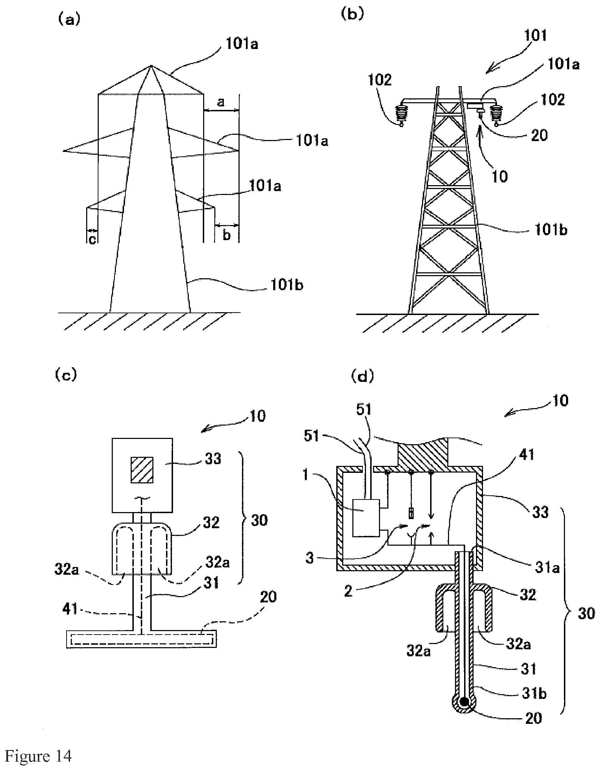

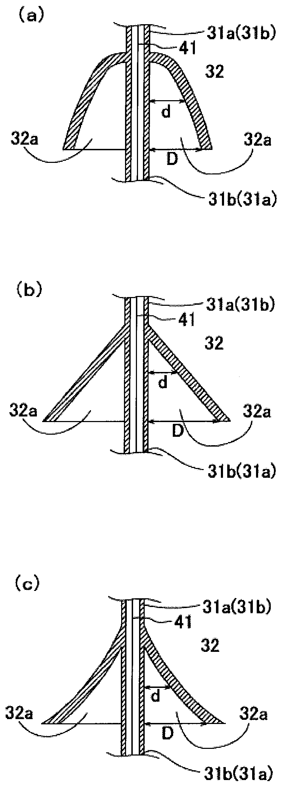

In addition, in the power supply device 10 according to each of the embodiments as described above, the shape of the gap 32a is not particularly limited, but it is more preferable that the snow accretion preventing section 32 is configured such that a cross-sectional width d of the gap 32a with respect to the elongated body 31 increases gradually toward a lower side in an extending direction of the elongated body 31. This gap 32a is exemplified by a bell shape, a conical shape having a linear inclined surface, and an umbrella shape in which the inclined surface becomes gentle gradually, as shown in FIGs. 14A to 14C, for example, and can have a tapered shape in which the cross-sectional width d of the gap 32a with respect to the elongated body 31 gradually expands to reach an opening of the cross-sectional width D.

In this case, the gap 32a has a shape that expands like a taper toward the lower side in the extending direction of the elongated body 31 as described above, so that even when snow adheres to the top of the snow accretion preventing section 32, the power supply device 10 can prevent snow as the snow slides along the tapered slope of the snow accretion preventing section 32 by its own weight and easily falls spontaneously while keeping the distance from the elongated body 31, resulting in that a ground short circuit due to snow accumulation is avoided, thereby obtaining more stable electric power.

Reference Signs List

| | |
|---|---|
| 1 | Transformer |
| 1a | Ideal Transformer |
| 2 | Arcing Horn |
| 3 | Short Earth |
| 4 | Low-Voltage Outlet |
| 5 | Low-Voltage Plug |
| 10 | Power Supply Device |
| 20 | Induction Electrode |
| 21 | Connection |
| 30 | Support |
| 31 | Elongated Body |
| 31a | One End |
| 31b | Another End |
| 31c | Inclined Part |
| 31d | Vertical Part |
| 32 | Snow Accretion Preventing Section |
| 32a | Gap |
| 32b | Enclosed Space |
| 33 | Housing |
| 34 | Mounting |
| 34a | Plate-Like Body |
| 34b | Tubular Body |
| 34c | Bottom Plate |
| 34d | Installation Holder |
| 35 | Cover |
| 36 | Mounting Bracket |
| 37 | Pipe |
| 38 | Tube |
| 40 | Input Section |
| 41 | High-Voltage Insulated Wire |
| 50 | Output Section |
| 51 | Low-Voltage Cable |
| 101 | Supporting Structure |
| 101a | Cross Arm Member |
| 101b | Main Co lumn Member |
| 102 | Overhead Electric Wire |
| 200 | Load |
| 300 | Ground |
| 310 | Power Supply Device |
| 311 | Induction Electrode |
| 312 | Housing |
| 313 | Mounting Bracket |
| 314 | Arm |
| 315 | Disk |
| 316 | High-Voltage Insulated Wire |
| 317 | Power Supply Device Control Box |
| 320 | Camera |
| 321 | Camera Cable |
| 330 | Projector |
| 341 | Lead Cable |
| 342 | Monitoring Box |
| 343 | Distribution Line |

| | |
|---|---|
| 344 | Low-Voltage Service Wire |
| 345 | Distribution Board |
| 346 | Service Cable |
| 347 | AC 100 V Power Line |
| 348 | Branch Box |
| 400 | Snow |

**Claims**

1.  A power supply device comprising:

    an induction electrode that is disposed to be opposed to an overhead electric wire laid on a supporting structure of a power transmission line;
    a support that is secured to the supporting structure of the power transmission line and supports the induction electrode;
    a transformer that is connected in parallel to a stray capacitance between the induction electrode and a ground and steps down a primary voltage to output a secondary voltage;
    a capacitor that is connected in parallel to a secondary winding on a secondary side of the transformer; and
    an output section that is drawn from both ends of the secondary side of the transformer and supplies power to a load in a state where a parallel circuit including the stray capacitance and the capacitor as well as an excitation susceptance of the transformer is operated as a parallel resonance circuit, wherein
    the support comprises:

        an elongated body that has one end secured on a side of the supporting structure of the power transmission line and another end disposed spaced apart from the supporting structure of the power transmission line to support the induction electrode; and
        a snow accretion preventing section that is disposed on an intermediate portion of the elongated body and has a gap between the snow accretion preventing section and the elongated body, the gap opening in a downward direction along which the elongated body extends.

2.  The power supply device according to claim 1, wherein the snow accretion preventing section is configured such that the elongated body extends upwardly to dispose the induction electrode at the other end of the elongated body and the gap opens in the downward direction toward the one end of the elongated body.

3.  The power supply device according to claim 1, wherein the snow accretion preventing section is configured such that the elongated body extends downwardly to dispose the induction electrode at the other end of the elongated body and the gap opens in the downward direction toward the other end of the elongated body.

4.  The power supply device according to any one of claims 1 to 3, wherein the elongated body of the support comprises a vertical part that is substantially perpendicular to the ground and includes the other end and an inclined part that is inclined with respect to the ground and includes the one end.

5.  The power supply device according to any one of claims 1 to 4, wherein:

    the one end of the elongated body of the support is secured to the supporting structure of the power transmission line; and
    the snow accretion preventing section of the support includes the transformer in an upper space of the gap.

6.  The power supply device according to any one of claims 1 to 5, wherein the support comprises a housing that is provided between the one end of the elongated body and the supporting structure of the power transmission line and includes the transformer therein.

7.  The power supply device according to any one of claims 1 to 6, wherein the snow accretion preventing section is configured such that a cross-sectional width of the gap with respect to the elongated body increases gradually toward a lower side in an extending direction of the elongated body.

Figure 1

(a)

(b)

(c)

(a)

(b)

(c)

Figure 3

(a)

(b)

Figure 4

(a)

(b)

Figure 5

(a)

311
311
311
315
314
312
313
310

E

316
315

G

(b)

400
311
311
315
311
400
B
B
315
316
314
312
313
310

Figure 6

(a)

(b)

(c)

Figure 7

22

Figure 8

(a)

(b)

Figure 9

(a)

(b)

Figure 10

(a)

(b)

Figure 11

(a)

(b)

35

35

(c)

35

(d)

32a

Figure 12

Figure 13

(a)

(b)

(c)

(d)

Figure 14

(a)

31a(31b)
41
32
32a
d
32a
D
31b(31a)

(b)

31a(31b)
41
32
32a
d
32a
D
31b(31a)

(c)

31a(31b)
41
32
32a
d
32a
D
31b(31a)

# EP 3 340 430 A1

<table>
<tr><td colspan="2" align="center">**INTERNATIONAL SEARCH REPORT**</td><td>International application No.<br><br>PCT/JP2016/074042</td></tr>
</table>

| | |
|---|---|
| **A. CLASSIFICATION OF SUBJECT MATTER**<br>*H02J50/05*(2016.01)i | |

According to International Patent Classification (IPC) or to both national classification and IPC

**B. FIELDS SEARCHED**

Minimum documentation searched (classification system followed by classification symbols)
H02J50/05

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-139059 A  (Daiden Co., Ltd.),<br>19 July 2012 (19.07.2012),<br>paragraphs [0026], [0027], [0074] to [0076];<br>fig. 1, 7<br>(Family: none) | 1-7 |
| A | Microfilm of the specification and drawings annexed to the request of Japanese Utility Model Application No. 76528/1984(Laid-open No. 190105/1985)<br>(Kinpo Denki Kabushiki Kaisha),<br>17 December 1985 (17.12.1985),<br>entire text; all drawings<br>(Family: none) | 1-7 |

[X] Further documents are listed in the continuation of Box C.          [ ] See patent family annex.

| | |
|---|---|
| *   Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>14 October 2016 (14.10.16) | Date of mailing of the international search report<br>25 October 2016 (25.10.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

31

**INTERNATIONAL SEARCH REPORT**

International application No.

PCT/JP2016/074042

C (Continuation). DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 11671/1989(Laid-open No. 103462/1990) (The Tokyo Electric Power Co., Inc.), 16 August 1990 (16.08.1990), entire text; all drawings (Family: none) | 1-7 |

Form PCT/ISA/210 (continuation of second sheet) (January 2015)

**EP 3 340 430 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009072444 A1

- JP 2012139059 A